# EUROPÄISCHE PATENTANMELDUNG

(11) **EP 1 220 184 A2**
(43) Veröffentlichungstag der Anmeldung: **03.07.2002**
(21) Anmeldenummer: 01250389.2
(22) Anmeldetag: 06.11.2001
(51) Int. Cl.: G09F 3/10, B42F 21/06

(54) **Planmarker**

(30) Priorität: 07.11.2000 DE 20107391 U
(71) Anmelder: Schmedes, Sven, 10967 Berlin (DE)
(72) Erfinder: Schmedes, Sven, 10967 Berlin (DE)

(57) **Zusammenfassung**

Der Planmarker ist eine Erfindung, die das Kennzeichnen von Bezugspunkten in Stadtplänen und Landkarten vereinfacht. Die Kennzeichnung der jeweiligen Punkte erfolgt mit einer wiederablösbaren Umrandung die z.B. den Zielort markiert, ohne die direkte Umgebung abzudecken.

Die Umradung ist beliebig oft wiederablösbar und kann z.B. kreisförmig aus transparentem oder farbigen Werkstoffen hergestellt werden.

## Beschreibung

Die Erfindung betrifft einen Planmarker, der das Kennzeichnen und Wiederfinden von Bezugspunkten in gebräulichen Stadtplänen, Lageplänen, Landkarten und Zeichnungen erleichtern soll.

Markierungszeichen herkömmlicher Art z.B. in Form von flächigen, selbstklebenden und wiederablösbaren Pfeilen oder Punkten haben den Nachteil, dass sie in Stadtplänen oder Landkarten entweder den Zielort selbst oder einen wichtigen Teil der Umgebung überdecken.

Am Beispiel für ein Markierungszeichen gemäß DE-U1 93 07 617 wird deutlich, dass die vorgeschlagene Ausführung in Form eines Pfeils oder Zeigers zwar eine hohe Gebrauchsfreundlichkeit aufweist, sich jedoch zur genauen Kennzeichnung von Bezugspunkten und deren Umgebung in Stadtplänen und Landkarten nur bedingt eignet.
An dem vorgenannten Markierungszeichen ist eine Grifflasche vorgesehen. Diese erleichtert das Erfassen des Markierungszeichens beim Ablösen von der gekennzeichneten Fläche. Von Nachteil ist jedoch, dass diese Lasche ebenfalls Informationen bzw. Beschriftungen der Karte im Markierungsbereich verdeckt.

Da in Stadtplänen und Landkarten die Informationen auf kleiner Fläche sehr komprimiert dargestellt sind, werden durch die herkömmlichen Markierungszeichen mit einer verhältnismässig grossen Fläche wichtige Informationen in der unmittelbaren Umgebung des Zielortes überdeckt und damit unlesbar gemacht.
Weiterentwickelte Markierungszeichen in Form von grossflächigen, kreisförmigen Umrandungen sind als Markierung für den Standort in grossen Übersichtsplänen sowie Stadtplänen an öffentlichen Plätzen und in U-Bahn-Stationen bekannt. Die vorgenannte Markierung ist bisher ausschließlich für eine permanente Kennzeichnung von nur einem Standort vorgesehen und kann nicht wiederverwendet werden. Darüber hinaus eignet sich eine solche großflächige Markierung, z.B. als Umrandung, nicht zur Kennzeichnung von Bezugspunkten in gebräuchlichen, kleinformatigen Stadtplänen und Landkarten, da die Markierung zum Einen nicht rückstandsfrei wiederablösbar bzw. wiederverwendbar ist und zum Anderen in der flächigen Ausführung schwierig zu handhaben ist.

Ein weiterer Nachteil der vorgenannten Markierungen ist, dass innerhalb eines Planes nicht mehrere Bezugspunkte gekennzeichnet werden können, da bisher eine sinnfällige Unterscheidung der markierten Punkte aufgrund der einfachen, undifferenzierten Markierung z.B. in Form einer flächigen, kreisförmigen Umrandung nicht möglich ist.

Der Erfindung liegt daher die Aufgabe zugrunde, einen Planmarker zu schaffen, mit welchem genaue Bezugspunkte in Stadtplänen, Lageplänen, Landkarten und Zeichnungen markiert werden können und damit ein Wiederauffinden und Orientieren erleichtert wird, ohne dass dabei informative Beschriftungen umliegender Bereiche abgedeckt werden.

Erfindungsgemäß wird diese Aufgabe dadurch gelöst, dass der Planmarker als ein, eine innere Fläche umrandender, gegenüber der zu markierenden Fläche erhabener Körper ausgebildet und dieser Umrandungskörper transparent ist, wobei aufgrund der Transparenz die Informationen des Zielortes und der unmittelbaren Umgebung einwandfrei lesbar bleiben.

Eine vorteilhafte Weiterbildung der Erfindung kann darin bestehen, dass die von dem transparenten Umrandungskörper eingeschlossene innere Fläche von unten mit einem transparenten Werkstoff abgedeckt ist, wobei auf der Unterseite des transparenten Umrandungskörpers und/oder der so entstandenen transparenten Fläche unlösbar ein an sich bekanntes, selbstklebendes Befestigungsmittel aufgebracht ist, mit welchem der Planmarker bei Bedarf von der markierten Fläche wiederablösbar ist.
Dadurch wird eine Vergrößerung der nutzbaren Fläche zum permanenten Aufbringen des Befestigungsmittels erreicht.
Von wesentlichem Vorteil ist auch, dass dieses Befestigungsmittel gleichfalls transparent ist, weil damit die im Markierungsbereich aufgedruckten Informationen nicht verdeckt werden und somit lesbar bleiben.

Der Planmarker kann vorteilhafterweise in verschiedenen Formen, gemäß Anspruch 3, und unterschiedlichen Farben gemäß Anspruch 6 ausgeführt sein, so dass der Bezugspunkt eindeutig und kontrastreich markiert wird. Der Planmarker kann gemäss Anspruch 13 auch als nicht transparenter Körper ausgebildet sein, um den Kontrast zur Fläche zu verstärken.

Mit dem Planmarker können somit nach Bedarf permanent oder temporär wichtige Bezugspunkte wie z.B. der eigene Wohnort oder mehrere Orientierungspunkte auf einer Strecke sinnfällig gekennzeichnet werden. Der Planmarker kann infolge des auf die Unterseite unlösbar aufgebrachten Befestigungsmittels, von der markierten Fläche durch leichtes Anheben des Umrandungskörpers vom Untergrund rückstandsfrei abgenommen und an anderer Stelle wieder aufgebracht werden.

Von Vorteil für das Wiederablösen des aufgebrachten Planmarkers von der markierten Fläche ist, dass der Umrandungskörper, entsprechend Anspruch 4, z.B. mit einem kreis- oder halbkreisförmigen rechteckigen Querschnitt hergestellt ist, wobei insbesondere gemäß Anspruch 5, der nach oben weisende Bereich des Umrandungskörpers als Griffelement ausgebildet ist.
Durch die erhabene Kontur wird das Erfassen des Planmarkers sowohl beim Aufbringen auf die zu markierende Fläche, als auch beim Wiederablösen von dieser, wesentlich erleichtert.

Der transparente Umrandungskörper sowie die vorgenannte transparente Fläche können, nach Anspruch 7 bzw. Anspruch 8, beschriftbar und/oder bedruckbar ausgeführt werden, so dass unterschiedliche Zeichen und/oder Symbole und/oder Zahlen und/oder Buchstaben gemäß Anspruch 9 aufgebracht werden können, um das Zuordnen von verschiedenen Bezugspunkten in einer Reihen- bzw. Rangfolge auf einem Plan zu erleichtern.
Die Verwendung von aufgebrachten Pfeilen auf der transparenten Fläche stellt eine besonders vorteilhafte Ausführungsvariante dar, da hierdurch auf sinnfällige Weise eine Richtungsänderung z.B. an Strassenkreuzungen markiert werden kann.
Die Symbole und/oder Zeichen und/oder Informationen können auch direkt auf den Umrandungskörper aufgebracht werden, um auf diese Weise einen noch stärkeren Kontrast zum Untergrund, der meist ein mehrfarbiger Plan ist, zu erreichen.
Durch das einfache, flexible Kennzeichnen von unterschiedlichen Bezugspunkten kann darauf verzichtet werden unschöne, irreversible, handschriftliche Vermerke im Stadtplan vorzunehmen.

Vorteilhafte Weiterbildungen und Ausgestaltungen der erfindungsgemäßen Lösung sind aus den übrigen Unteransprüchen und aus dem nachfolgend an Hand der Zeichnungen näher beschriebenen Ausführungsbeispiele ersichtlich.

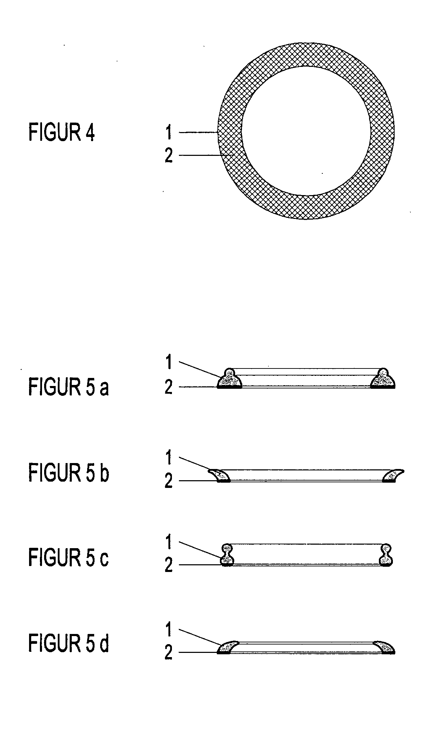

Dabei zeigt
- Fig.: 1: eine Draufsicht des Umrandungskörpers 1, der transparent und kreisförmig ausgebildet ist,
- Fig.: 2: eine Seitenansicht des Umrandungskörpers 1, der mit einem rechteckigen Querschnitt ausgeführt ist,
- Fig.: 3: einen Schnitt A-A - Querschnitt des Umrandungskörpers 1, der mit einem rechteckigen Querschnitt ausgeführt ist,
- Fig.: 3a: eine Variante gemäß Schnitt A-A - Schnitt durch den Umrandungskörper 1, der mit einem kreisförmigen Querschnitt ausgeführt ist,
- Fig.: 3b: eine Variante gemäß Schnitt A-A - Schnitt durch den Umrandungskörper 1, der mit einem halbkreisförmigen Querschnitt ausgeführt ist,
- Fig.: 3c: ein Schnitt B-B - Schnitt durch den Umrandungskörper 1, der mit einem halbkreisförmigen Querschnitt ausgeführt und mit einer etwa gleich grossen transparenten Fläche 3 verbunden ist,
- Fig.: 4: eine Ansicht von unten auf das Befestigungsmittel 2 von dem Umrandungskörper 1, der kreisförmig ausgebildet ist,
- Fig.: 5a: eine Variante gemäß Schnitt A-A - Schnitt durch den Umrandungskörper 1, der mit einem als Griffelement gestalteten Querschnitt ausgeführt ist,
- Fig.: 5b: eine Variante gemäß Schnitt A-A - Schnitt durch den Umrandungskörper 1, der mit einem nach außen verlaufenden Querschnitt ausgeführt ist,
- Fig.: 5c: eine Variante zu Fig. 5a, gemäß Schnitt A-A - Schnitt durch den Umrandungskörper 1, der mit einem als Griffelement gestalteten Querschnitt ausgeführt ist,
- Fig.: 5d: eine Variante gemäß Schnitt A-A - Schnitt durch den Umrandungskörper 1, der mit einem nach innen verlaufenden Querschnitt ausgeführt ist,
- Fig.: 6: eine Draufsicht auf den Umrandungskörper 1, der kreisförmig ausgebildet und mit einer etwa gleich grossen transparenten Fläche 3, auf welche eine Zahl und ein Symbol aufgebracht wurde, verbunden ist,
- Fig.: 7: eine Draufsicht auf den Umrandungskörper 1, der kreisförmig ausgebildet ist und auf den mehrere Symbole 5 aufgebracht sind,
- Fig.: 8: eine Draufsicht auf den Umrandungskörper 1, der kreisförmig ausgebildet ist und auf den mehrere Buchstaben 5 aufgebracht sind,
- Fig.: 9: eine Draufsicht auf den Umrandungskörper 1, der in Form eines Dreiecks ausgebildet ist,
- Fig.: 10: eine Draufsicht auf den Umrandungskörper 1, der kreisförmig ausgebildet ist und der mit einer etwa gleich grossen transparenten Fläche 3, auf welcher ein Fadenkreuz aufgebracht ist, verbunden ist,
- Fig.: 11: eine Draufsicht auf den Umrandungskörper 1, der quadratisch ausgebildet ist und der mit einer etwa gleich grossen transparenten Fläche 3, auf welcher ein Pfeil aufgebracht ist, verbunden ist,
- Fig.: 12: ein Beispiel von einem Ausschnitt aus einem Stadtplan mit einem aufgebrachten kreisförmigen Planmarker.

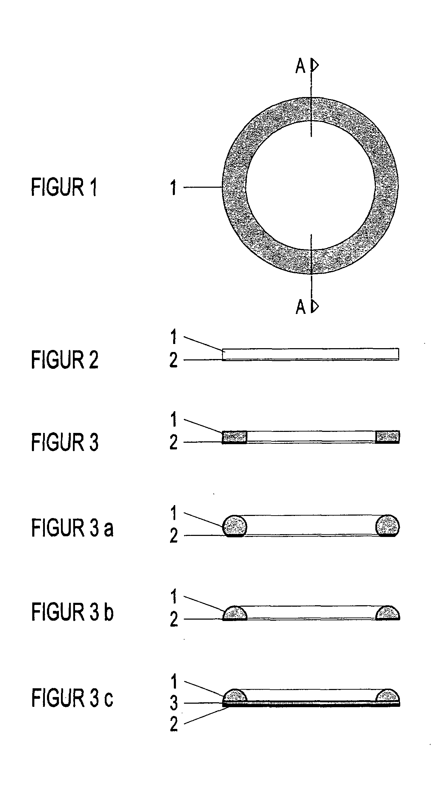

Die Fig. 1 zeigt in einer Draufsicht einen Umrandungskörper 1, welcher transparent und kreisförmig ausgebildet ist und auf dessen Unterseite unlösbar ein selbstklebendes, transparentes Befestigungsmittel 2 aufgebracht ist.

Mit dem Planmarker können nach Bedarf permanent oder temporär wichtige Bezugspunkte, wie z.B. der eigene Wohnort oder mehrere Orientierungspunkte, auf einer Strecke sinnfällig gekennzeichnet werden. Beispielsweise könnten auf einer Strecke die Farbe Rot für den Standort und Grün für das Ziel verwendet werden, wobei die markanten Orientierungspunkte auf der Strecke mit anders farbigen Planmarkern eindeutig gekennzeichnet werden können.
Der Planmarker kann infolge des auf seiner Unterseite unlösbar aufgebrachten Befestigungsmittels 2, welches sich jedoch rückstandsfrei durch leichtes Anheben des Umrandungskörpers 1 von der bisher markierten Untergrundfläche lösen lässt, abgenommen und an anderer Stelle wieder aufgebracht werden.
Das transparente, rückstandsfrei von der markierten Fläche wiederablösbare Befestigungsmittel 2 kann je nach Erfordernis auf die Unterseite des Umrandungskörpers 1 und/oder auf die transparente Fläche 3 vollflächig oder nur teilweise aufgebracht werden. Als Befestigungsmittel 2 kann unter Anderem eine selbstklebende, dauerelastische, rückstandsfrei wiederablösbare Klebebeschichtung und/oder Haftbeschichtung mit hoher Alterungsbeständigkeit verwendet werden. Hierbei ist das Befestigungsmittel 2 unlösbar mit dem Träger, also dem transparenten Umrandungskörper 1 und/oder der transparenten Fläche 3 verbunden.

Die Figur 2 zeigt in einer Seitenansicht den Umrandungskörper 1, der mit einem rechteckigen Querschnitt ausgeführt ist und auf dessen Unterseite ein selbstklebendes, transparentes, Befestigungsmittel 2 aufgebracht ist.

In den Figuren 3-3 b werden verschiedene Varianten zur Ausbildung des Querschnittes des Umrandungskörpers 1 dargestellt. Die Ausführung des Querschnittes des Umrandungskörpers 1 hat besonderen Einfluss auf eine anwendungsfreundliche Handhabung des Planmarkers. Durch die Verwendung z.B. eines Rechteckquerschnittes kann die Außenkante leicht angehoben werden, um so den Planmarker vom Untergrund zu lösen und an anderer Stelle wieder aufzubringen. Durch Verwendung eines Kreisquerschnittes kann der Planmarker durch leichtes Rollen des Umrandungskörpers 1 auf einfache Weise vom Untergrund gelöst und an anderer Stelle wieder aufgebracht werden.

Die Figur 3 c zeigt eine Kombination des kreisförmig ausgebildeten Umrandungskörpers 1 mit halbkreisförmigen Querschnitt und mit einer etwa gleich großen, kreisförmigen, transparenten Fläche 3. Diese Fläche 3 kann zum Bedrucken und/oder Beschriften genutzt werden.

Die Figur 4 zeigt eine Ansicht von unten auf einen kreisförmigen Umrandungskörper 1, auf dessen Unterseite das transparente Befestigungsmittel 2 unlösbar aufgebracht ist.

Die Figuren 5 a bis 5 d zeigen weitere vorteilhafte Ausbildungsmöglichkeiten des Querschnittes des transparenten Umrandungskörpers. Der nach oben weisende Bereich ist hier als Griffelement ausgebildet. Diese Formen erleichtern das Erfassen des Planmarkers beim Aufbringen auf die zu markierende Fläche bzw. beim Wiederablösen des Planmarkers von dieser.

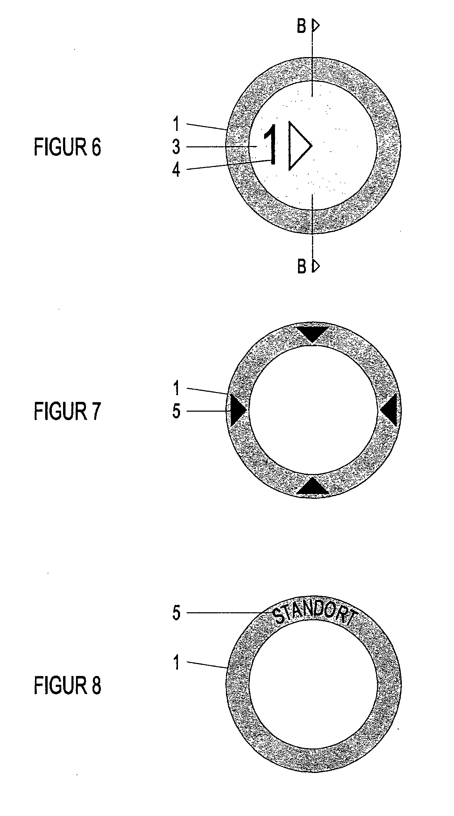

Die Figuren 6 bis 8 zeigen verschiedene Varianten eines kreisförmig ausgebildeten Umrandungskörpers 1 auf den zusätzliche Informationen zur leichteren Unterscheidung mehrerer Planmarker aufgebracht sind.
Die Informationen 4 sind in Figur 6 auf die transparente Fläche 3 aufgebracht.
In den Figuren 7 und 8 sind die Informationen 5 auf den Umrandungskörper 1 aufgebracht.

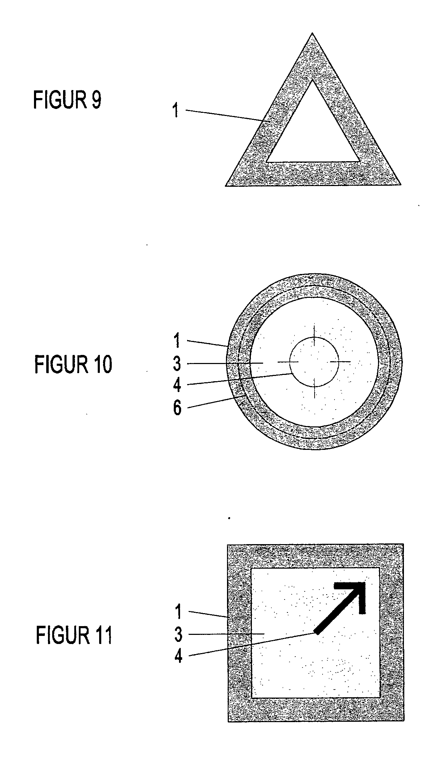

Die Figur 9 zeigt die Draufsicht auf einen Umrandungskörper 1, der in Form eines Dreiecks ausgebildet ist.

Figur 10 zeigt die Draufsicht auf den Umrandungskörper 1, der in Form eines Kreises ausgebildet ist und der mit einer etwa gleich großen, kreisförmigen, transparenten Fläche 3, auf welcher eine Information 4, in Form eines Fadenkreuzes, aufgebracht ist, unlösbar verbunden ist.
Die mit Ziffer 6 gekennzeichnete gestrichelte Linie markiert die Außenkante des unlösbar auf die Unterseite des Planmarkers aufgebrachten selbstklebenden, transparenten Befestigungsmittels, das im Randbereich ausgespart wurde, um das Ablösen des Planmarkers vom Untergrund zu erleichtern.

Die Figur 11 zeigt die Draufsicht auf den Umrandungskörper 1, der in Form eines Quadrates ausgebildet ist und der mit einer etwa gleich großen, quadratischen, transparenten Fläche 3, auf welche eine Information 4, in Form eines Pfeiles, aufgebracht ist, unlösbar verbunden ist.

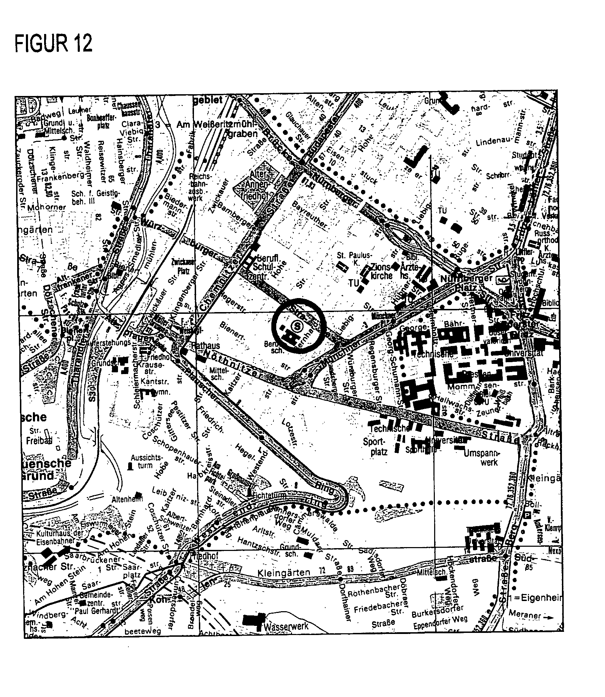

Die Figur 12 zeigt einen Ausschnitt aus einem Stadtplan, in dem ein Bezugspunkt mit einem kreisförmigen Planmarker gekennzeichnet ist.

Die Planmarker können in unterschiedlichen Formen und Farben, mit oder ohne aufgebrachten Zeichen als Orientierungshilfe in Verbindung mit einem Stadtplan zur Anwendung kommen. Auf diese Weise kann die Benutzung des Stadtplanes in der zumeist unbekannten Umgebung erleichtert werden.
Derartige Stadtpläne können, bereits mit dem Planmarker-System ausgestattet, verkauft werden. An einer günstigen Stelle des Stadtplanes können z.B. verschiedenfarbige, kreisförmige Planmarker aufgebracht sein, so dass der Nutzer diese direkt beim ersten Gebrauch verwenden und anschliessend für andere Zielorte einfach umsetzen kann.

Für handliche Lagepläne, z.B. von einem Messegelände, können Planmarker auf die gleiche, vorgenannte Weise verwendet werden, z.B. in Form von beschriftbaren und/oder bedruckten Umrandungskörpern 1, die mit einer transparenten Fläche 3, die ebenfalls beschriftbar und/oder bedruckt ausgeführt ist, kombiniert sind. Diese Planmarker können im voraus bereits auf entsprechende Standorte verteilt werden, z.B. zur Kennzeichnung von wechselnden Standorten auf Messen wie Event-Standorte.

Die Stadtpläne, Landkarten und Lagepläne können z.B. auch mit einer einfachen Legende ausgestattet sein, in der von dem jeweiligen Nutzer der Karte die Orte, die mit Planmarkern und/oder Zahlen und/oder Buchstaben versehen sind, näher beschrieben werden können (z.B. O=Wohnung, □=Arbeitsplatz, etc.).

Die bedruckbaren Flächen des Umrandungskörpers 1 und/oder der damit verbundenen transparenten Fläche 3 können auch zum Aufbringen von Werbung und Logos verwendet werden. Ein Standard-Stadtplan kann zum Beispiel mit den markierten Standorten verschiedener Filialen einer grossen Restaurantkette verkauft werden.

Die Planmarker können auch in einer Art Spender verkauft werden, um auf diese Weise dem potentiellen Nutzer die Möglichkeit zu geben, sich nachträglich mit dem Planmarker-System auszustatten. Vorteil eines solchen Spenders ist die Bereitstellung einer großen Anzahl verschiedener Planmarker, die beliebig auf einer Strecke plaziert, oder zur Markierung einer Vielzahl von Sehenswürdigkeiten in einem oder mehreren Stadtplänen verwendet werden können.
Ein Spender für Planmarker kann so gestaltet sein, dass die Planmarker auf einem Trägerband aufgebracht sind und jeweils einzeln nach Bedarf an einer Ausgabeöffnung abgenommen oder direkt mit dem Spender aufgebracht werden können.
Der Spender kann auch mit einer Art Vorrichtung ausgestattet sein, die es ermöglicht den Planmarker direkt aus einem Depot exakt auf dem Zielort zu plazieren. Für die Konstruktion und Gestaltung des Spenders für Planmarker ist auch jede andere Konfiguration denkbar.

Für die Herstellung der Planmarker kann die Größe und die Dimensionierung der Umrandungskörper 1 frei, entsprechend dem Masstab des verwendeten Stadtplans oder Landkarte, gewählt werden.
Die Ausbildung und Farbe der Umrandungskörper 1 sowie der aufgebrachten Zeichen, Symbole, Buchstaben und Zahlen 4 bzw. 5 ist den jeweiligen Anforderungen vom Hersteller entsprechend festzulegen.

## Patentansprüche

1. Planmarker zur einfachen Kennzeichnung von Bezugspunkten in Stadtplänen, Landkarten, Lageplänen und Zeichnungen, auf dessen Unterseite unlösbar ein selbstklebendes Befestigungsmittel aufgebracht ist, wodurch der Planmarker bei Bedarf von der markierten Fläche wiederablösbar ist, dadurch gekennzeichntet, dass
der Planmarker als ein, eine innere Fläche umrandender, Körper ausgebildet und dieser Umrandungskörper (1) transparent ausgebildet ist.

2. Planmarker nach Anspruch 1,
dadurch gekennzeichntet, dass
die von dem transparenten Umrandungskörper (1) eingeschlossene innere Fläche von unten mit einem transparenten Werkstoff abgedeckt ist, wobei auf der Unterseite des transparenten Umrandungskörpers (1) und/oder der transparenten Fläche (3) unlösbar ein an sich bekanntes, selbstklebendes Befestigungsmittel (2) aufgebracht ist, mit welchem der Planmarker bei Bedarf von der markierten Fläche wiederablösbar ist und dieses Befestigungsmittel (2) gleichfalls transparent ist.

3. Planmarker nach Anspruch 1 und 2
**dadurch gekennzeichnet, dass**
der transparente Umrandungskörper (1) in Form von einem jeweils die innere offene Fläche einschließenden Kreis, Dreieck, Rechteck, Vieleck, Stern, Herz oder Form jeder anderen Konfiguration ausgebildet ist.

4. Planmarker nach einem der Ansprüche 1 bis 3,
**dadurch gekennzeichnet, dass**
der Querschnitt des transparenten Umrandungskörpers (1) als Kreis, Halbkreis, Kreisabschnitt, Ellipse, Dreieck, Rechteck oder Vieleck ausgebildet ist.

5. Planmarker nach einem der Ansprüche 1 bis 4,
**dadurch gekennzeichnet, dass**
der nach oben weisende Bereich des transparenten Umrandungskörpers (1) als Griffelement ausgebildet ist.

6. Planmarker nach Anspruch 1 bis 5,
**dadurch gekennzeichnet, dass**
der transparente Umrandungskörper (1) farbig und/oder fluoreszierend ausgebildet ist.

7. Planmarker nach einem der Ansprüche 1 bis 6,
**dadurch gekennzeichnet, dass**
der transparente Umrandungskörper (1) beschriftbar und/oder bedruckbar ausgeführt ist.

8. Planmarker nach Anspruch 2,
**dadurch gekennzeichnet, dass**
die transparente Fläche (3), die mit dem transparenten Umrandungskörper (1) zusammengefügt ist, beschriftbar und/oder bedruckbar ausgeführt ist.

9. Planmarker nach einem der Ansprüche 2 und 8,
**dadurch gekennzeichnet, dass**
auf dem transparenten Umrandungskörper (1) und/oder auf der transparenten Fläche (3) Markierungszeichen in Form eines Punktes, eines Fadenkreuzes, einer Fahne, eines Kreises und/oder Symbole und/oder Buchstaben und/oder Zahlen und/oder Informationen (4) aufgebracht sind.

10. Planmarker nach einem der Ansprüche 1 bis 9,
**dadurch gekennzeichnet, dass**
das auf die Unterseite des transparenten Umrandungskörpers (1) unlösbar aufgebrachte, selbstklebende, transparente Befestigungsmittel (2) im Randbereich des Umrandungskörpers (1) und/oder der transparenten Fläche (3) ausgespart oder gar nicht aufgebracht ist.

11. Planmarker nach einem der Ansprüche 1 bis 10,
**dadurch gekennzeichnet, dass**
das auf die Unterseite des transparenten Umrandungskörpers (1) unlösbar aufgebrachte, selbstklebende, transparente Befestigungsmittel (2) als eine transparente, dauerelastische, von der markierten Fläche rückstandsfrei wiederablösbare Klebebeschichtung und/oder Haftbeschichtung ausgebildet ist.

12. Planmarker nach einem der Ansprüche 2, 8 bis 10,
**dadurch gekennzeichnet, dass**
das auf die Unterseite der transparenten Fläche (3) unlösbar aufgebrachte, selbstklebende, transparente Befestigungsmittel (2) als eine selbstklebende, transparente, dauerelastische, von der markierten Fläche rückstandsfrei wiederablösbare Klebebeschichtung und/oder Haftbeschichtung ausgebildet ist.

13. Planmarker nach einem der Ansprüche 1 bis 12,
**dadurch gekennzeichnet, dass**
der Planmarker als ein gegenüber der zu markierenden Fläche erhabener Körper ausgebildet ist, der transparent oder nicht-transparent ist.
